## Europäisches Patentamt

## European Patent Office

## Office européen des brevets

(19)

(11) Veröffentlichungsnummer: **0 096 413**
**B1**

(12) **EUROPÄISCHE PATENTSCHRIFT**

(45) Veröffentlichungstag der Patentschrift:
03.09.86

(51) Int. Cl.⁴: **F 24 J 2/24, E 04 D 13/18**

(21) Anmeldenummer: **83105583.5**

(22) Anmeldetag: **07.06.83**

(54) **Dacheindeckungselement, insbesondere zur Gewinnung von Sonnenenergie.**

(30) Priorität: **07.06.82 DE 3221490**

(43) Veröffentlichungstag der Anmeldung:
**21.12.83 Patentblatt 83/51**

(45) Bekanntmachung des Hinweises auf die Patenterteilung:
**03.09.86 Patentblatt 86/36**

(84) Benannte Vertragsstaaten:
**AT BE CH FR GB IT LI NL**

(56) Entgegenhaltungen:
**EP-A-0 032 667**
**EP-A-0 048 982**
**DE-A-2 640 333**

(73) Patentinhaber: **Weitzel, Hans, Binger Strasse 29, D-6507 Ingelheim/Rhein (DE)**

(72) Erfinder: **Weitzel, Hans, Binger Strasse 29, D-6507 Ingelheim/Rhein (DE)**

(74) Vertreter: **Hain, Leonhard, Dipl.- Ing., Tal 18/IV, D-8000 München 2 (DE)**

## Beschreibung

Die Erfindung betrifft ein Dacheindeckungselement insbesondere zur Gewinnung von Sonnenenergie, aus Kunststoff oder dergleichen verformbarem Werkstoff, gemäß dem Oberbegriff des Patentanspruches 1.

Bei einem Dacheindeckungselement dieser Art (EP-A 0 045 982) ist ein pfannenförmiger Plattenkörper von einer Kopf- und Fußrippe begrenzt, und zum Durchfluß einer Wärmeträgerflüssigkeit ist ein Durchflußkanal vorgesehen, an dessen Enden Steckbohrungen zur Verbindung der Durchflußkanäle der sich überdeckenden Dacheindeckungselemente, und zwar die Einlauf-Steckbohrung in der Stirnfläche der Kopfrippe und die Auslauf-Steckbohrung nahe der Fußrippe als an der Unterseite des Plattenkörpers angebrachter Anschlußkrümmer, ausgebildet sind. Diese etwa in Strömungsrichtung verlaufenden Einsteckbohrungen werden durch ein flexibles Zwischenrohr miteinander verbunden. In diesem Bereich läßt sich keine Isolierschicht anbringen, weshalb bei ungünstigen Witterungsverhältnissen sich hier Kondenswasser, das dann in den Dachraum abtropft, bilden kann.

Der Erfindung liegt daher die Aufgabe zugrunde, bei einem gattungsgemäßen Dacheindeckungselement das Abtropfen von Kondenswasser in das Rauminnere und das Hindurchtreten von Regen und Schnee zu verhindern.

Diese Aufgabe wird an einem Dacheindeckungselement gemäß dem Oberbegriff des Patentanspruches 1 erfindungsgemäß durch die kennzeichnenden Merkmale dieses Patentanspruches gelöst.

Durch diese erfindungsgemäße Unterzugschürze wird die Überlappung der sich überdeckenden Dacheindeckungselemente vergrößert und dadurch ein längerer Fangraum für eintretenden Regen und Schnee gebildet. Erstreckt sich die Unterzugschürze auf den von einer Isolierschicht freigehaltenen Abschnitt, dann verhindert sie auch das Abtropfen von Kondenswasser. Diese Unterzugschürze läßt sich bei der Herstellung der Dacheindeckungselemente ohne weiteres anformen, insbesondere wenn es sich um ein Kunststofferzeugnis handelt.

Weitere Merkmale der Erfindung sind den Unteransprüchen zu entnehmen.

Die Erfindung wird nachfolgend anhand eines Ausführungsbeispieles, das auch in der Zeichnung schematisiert dargestellt ist, näher beschrieben. Es zeigen:

Fig. 1 eine Draufsicht auf einen Kopfteil einer Dachpfanne,

Fig. 2 eine Stirnansicht hierzu und

Fig. 3 einen Schnitt durch die Enden von zwei sich überdeckenden Dachpfannen.

Das dargestellte Dacheindeckungselement in Form einer Dachpfanne weist einen Plattenkörper 1 mit beispielsweise einer Mittelrolle 2 und den längsseitigen Übergreif- und Untergreifleisten 3 und 4 auf. Dazwischen befinden sich die Platten Abflachungen 5. Ein Durchflußkanal 7 erstreckt sich auf die Breite des eigentlichen Plattenkörpers mit den beiden Abflachungen 5 und der Mittelrolle 2. Disser Durchflußkanal ist vorteilhaft in den Plattenkörper eingeformt, was zweckmäßig bei einem aus Kunststoff hergestellten Plattenkörper durch Blasformen geschieht.

Ein verformbarer Kunststoff, wie entsprechend stabilisiertes Polypropylen, eignet sich besonders gut für die Herstellung solcher Dacheindeckungselemente. Beim Blasformen lassen sich auch die übrigen Profilierungen an der Ober- und Unterfläche gut und exakt ausbilden. So können neben dem Durchflußkanal auch die seitlichen Über- und Untergreifleisten mit ihren Rippen, wie auch die Kopf- und Fußrippen 8, 9 zu Hohlkörpern ausgebildet sein. Bei der gezeigten Dachpfanne sind längs der seitlichen Über- und Untergreifleisten 3 bzw. 4 noch Begrenzungswulste 10, ausgebildet. Da sich diese zwischen den Dachlatten befinden, können sie ausreichend hoch sein, um ein zur Aufnahme eines Wärmeisolierstoffes (nicht gezeigt) zu bilden. Ebenfalls wird zweckmäßig auch der Raum zwischen den sich über den Durchflußkanal erhebenden Über- und Untergreifleisten 3 und 4 im Bereich der Lattenauflage- und Überdeckungsabschnitte mit einem Wärmeisolierstoff ausgefüllt. Diese Isolierschichten lassen sich unmittelbar nach dem Formen der Plattenkörper gut und einfach aufbringen.

Soweit die ausgebildeten Hohlräume nicht für den Durchfluß des Wärmeträgermittels ausgenützt werden, können sie mit einer weiteren Flüssigkeit oder einem sonstigen Füllstoff gefüllt werden, um ein Plattengewicht zu erreichen, das im wesentlichen einer Ton- bzw. Betonplatte entspricht.

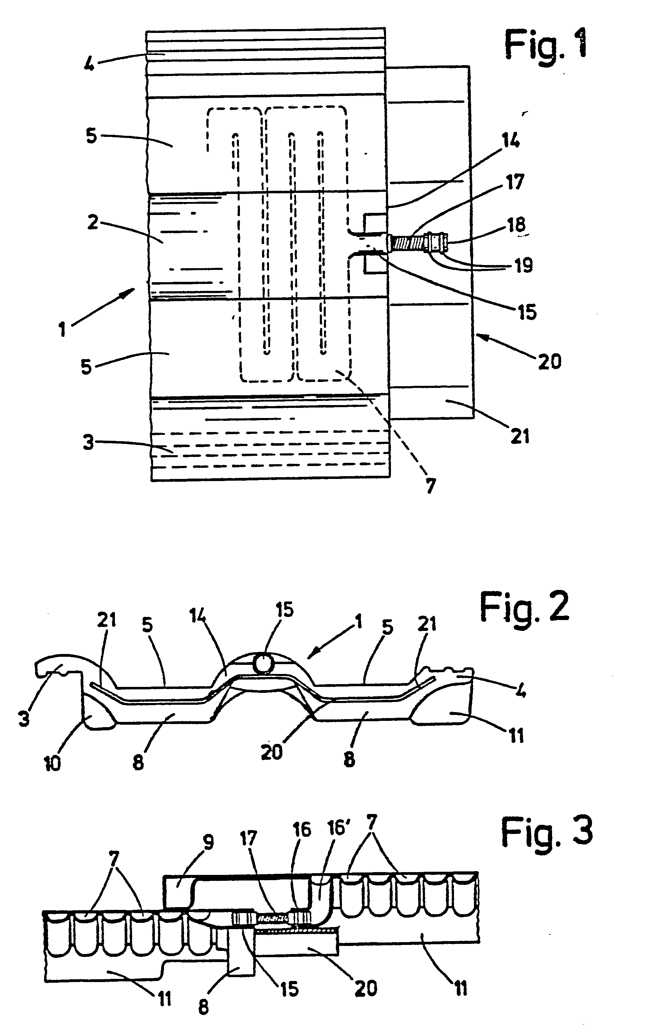

Am Kopfende 14 der Dachpfanne ist im Scheitel der Mittelrolle 2 eine Steckbohrung 15 bündig mit dieser Stirnkante ausgebildet, während eine weitere Steckbohrung 16 sich am Fußende der Pfanne befindet (Fig.3). Damit diese Steckbohrungen beispielsweise in einer Ebene liegen und geradlinig miteinander fluchten, ist die Steckbohrung 16 am Ende eines Abschlußkrümmers 16' ausgebildet. Beide Steckbohrungen bilden die Anschlußorgane des Durchflußkanales 7. Sie sind zweckmäßig auf der Längsmittellinie der Pfanne aufeinander ausgerichtet. Zur Verbindung der Steckbohrungen 15,16 von zwei sich überdeckenden Pfannen dient ein Steckrohr 17, das an seinen beiden Einsteckköpfen 18 aufgezogene Dichtringe 19 trägt, die zusammen mit den auf Paßsitz gefertigten Steckbohrungen eine dichte Verbindung entstehen lassen. Das Steckrohr 17 ist zweckmäßig flexibel und von entsprechender Länge, um die Verbindung der Dachpfannen leichter und schneller herstellen zu können.

Am kanalfreien Pfannen-Fußende und insbesondere im Bereich der Steckverbindung ist eine Wärmeisolierung nicht leicht anzubringen und aus wärmetechnischen Gründen auch nicht erwünscht, weil dann die überdeckende Dachpfanne die aufgenommene Wärme auf den darunterliegenden Durchflußkanal der überdeckten Dachpfanne übertragen kann. An diesem nicht isolierten Abschnitt bildet sich aber bei ungünstigen Witterungsverhältnissen Kondenswasser, das auf die darunter angeordnete Dachhaut oder in den Dachraum abtropft. Um dies zu vermeiden, sieht die Erfindung eine Unterzugschürze 20 am Kopfende der Dachpfanne vor. Diese Unterzugschürze steht zweckmäßig 5 bis 12 cm, vorteilhaft 7 bis 10 cm über die Kopfseite hinaus und erstreckt sich mindestens auf den Bereich der beiden Pfannenabflachungen 5 und der Mittelrolle 2, wobei sie unterhalb des Steckrohres hindurchgeführt ist. An den Seitenrändern 21 steigt die Unterzugschürze zweckmäßig so weit hoch, wie es die Abdeckung der Dachpfannen zuläßt. Damit das von der Unterzugschürze aufgefangene Kondens- oder sonstige Wasser gut abläuft, sind die Übergänge zum eigentlichen Plattenkörper leicht ansteigend, die dann in der verlegten Stellung einer Dachneigung noch eine ausreichende Abflußschräge bilden. Damit die in die Abflachungen eingreifenden Fußrippen 9 der überdeckenden Dachpfanne den Wasserablauf nicht behindern, sind an diesen zweckmäßig Abflußspalten (nicht sichtbar) ausgebildet.

Da durch die erfindungsgemäße Unterzugschürze 20 auch die Überlappung der Dachpfannen und damit auch der Fangraum für eintretende Regen- und Schneeteilchen vergrößert wird, ist sie nicht nur für die dargestellte Dachpfanne geeignet. Die Unterzugschürze kann vielmehr an jeder anderen Dachplatte und jedem Dachziegel, auch an Biberschwänzen oder sonstigen plattenförmigen Dacheindeckungselementen angebracht sein. Sie bildet für jedes Dacheindeckungselement mit einer zur Elementen-Ebene etwa gleichlaufenden Steckbohrung 15, die auch über das Kopfende 14 vorstehen kann, einen echten Auffangschirm. Die Länge dieser Unterzugschürze 20 soll mindestens im Bereich der Steckverbindung so groß sein, daß sie die Steckbohrung 16 und eventuell den Anschlußkrümmer 16' ausreichend untergreift.

**Patentansprüche**

1. Dacheindeckungselement, insbesondere zur Gewinnung von Sonnenenergie, aus Kunststoff oder dergleichen verformbarem Werkstoff, mit einem in einem mit Abfluß-Abflachungen (5) versehenen Plattenkörper (1) vorgesehenen Durchflußkanal (7) für eine Wärmeträgerflüssigkeit und mit an den Enden dieses Durchflußkanale als Einsteckbohrungen ausgebildeten Anschlußorganen (15, 16) zur Verbindung der Durchflußkanäle der sich überdeckenden Dacheindeckungselemente, dadurch gekennzeichnet, daß an seinem Kopfende (14) eine das Anschlußeindeckungselement untergreifende Unterzugschürze (20) ausgebildet ist, die sich seitlich zumindest bis zu den Abfluß-Abflachungen (5) erstreckt.

2. Dacheindeckungselement nach Anspruch 1, mit etwa in Durchflußrichtung verlaufenden Anschlußorganen, dadurch gekennzeichnet, daß die Unterzugschürze (20) sich unterhalb der Anschlußorgane (15, 16) erstreckt.

3. Dacheindeckungselement nach Anspruch 1 oder 2, mit einem pfannenförmigen Plattenkörper (1), der am Einhängeende (14) von einer Kopfrippe (8) begrenzt ist, dadurch gekennzeichnet, daß die Unterzugschürze (20) über die Stirnfläche der Kopfrippe (8) hinaussteht.

4. Dacheindeckungselement nach einem der Ansprüche 1 bis 3, dadurch gekennzeichnet, daß die Unterzugschürze (20) sich über die volle Breite des Plattenkörpers (1) erstreckt.

5. Dacheindeckungselement nach einem der Ansprüche 1 bis 4, dadurch gekennzeichnet, daß die Unterzugschürze (20) seitlich mit Anstiegrändern (21) endet.

6. Dacheindeckungselement nach einem der Ansprüche 1 bis 5, dadurch gekennzeichnet, daß die Unterzugschürze (20) stufenlos in die Oberfläche des Plattenkörpers (1) übergeht.

7. Dacheindeckungselement nach einem der Ansprüche 1 bis 6, dadurch gekennzeichnet, daß die Unterzugschürze (20) bei verlegten Eindeckungselementen zumindest das Anschlußorgan des Anschlußelementes vollständig unterfaßt.

8. Dacheindeckungselement nach einem der Ansprüche 1 bis 7, dadurch gekennzeichnet, daß an seinen Fußrippen (9) Abflußspalten ausgebildet sind.

**Claims**

1. Roofing element, particularly for the collection of solar energy, made of synthetic material or a similar ductile material, comprising a flow channel (7) for a heat transfer fluid, the flow channel being provided in a plate body (1) having discharge flattenings (5), and connecting elements (15, 16) formed as insertion bores at the ends of said flow channel for connecting the flow channels of the overlapping roofing elements, characterized in that at the top (14) of the roofing element an apron plate (20) is formed passing below the neighbouring roofing element and extending laterally at least to the discharge flattenings (5).

2. Roofing element according to claim 1, having connecting elements running approximately in the flow direction, characterized in that the apron plate (20) extends below the connecting elements (15, 16).

3. Roofing element according to claim 1 or 2, having a pan-like plate body (1) being limited at its hooking end (14) by a head rib (8), characterized in that the apron plate (20) projects over the front surface of the head rib (8).

4. Roofing element according to one of the claims 1 to 3, characterized in that the apron plate (20) extends over the entire width of the plate body (1).

5. Roofing element according to one of the claims 1 to 4, characterized in that the sides of the apron plate (20) end with ascending edges (21).

6. Roofing element according to one of the claims 1 to 5, characterized in that the apron plate (20) aligns with the surface of the plate body (1).

7. Roofing element according to one of the claims 1 to 6, characterized in that with installed roofing elements the apron plate (20) completely passes below at least the connecting means of the connecting element.

8. Roofing element according to one of the claims 1 to 7, characterized in that at its bottom ribs (9) discharge gaps are formed.

**Revendications**

1. Elément de couverture de toit, prévu en particulier pour recueillir l'énergie du soleil, en matière plastique ou en un matériau malléable similaire, comportant un conduit (7) de circulation pour un fluide caloporteur qui est prévu dans un corps de panneau (1) muni de plats (5) d'écoulement, et des organes de raccordement (15, 16) réalisés aux extrémités dudit conduit de circulation sous la forme d'orifices à emboîtement pour relier les conduits de circulation des éléments de couverture de toit se recouvrant l'un l'autre caractérisé par le fait qu'à l'extrémité de sa tète (14) est façonné un tablier de support (20) qui passe par en-dessous l'élément de couverture de toit de liaison et s'étend sur les côtés au moins jusqu'aux plats (5) d'écoulement.

2. Elément de couverture de toit selon la revendication 1, avec des organes de raccordement s'étendant à peu pres dans le sens de la circulation, caractérisé par le fait que le tablier de support (20) s'étend en-dessous des organes de raccordement (15, 16).

3. Elément de couverture de toit selon la revendication 1 ou 2, avec un corps de panneau (1) en forme de cuvette qui est délimité à son extrémité d'accrochage (14) par une nervure (8) de tête, caractérisé par le fait que le tablier de support (20) dépasse au-delà de la face frontale de la nervure (8) de tête.

4. Elément de couverture de toit selon l'une des revendications 1 à 3, caractérisé par le fait que le tablier de support (20) s'étend sur la pleine largeur du corps de panneau (1).

5. Elément de couverture de toit selon l'une des revendications 1 à 4, caractérisé par le fait que le tablier de support (20) s'achéve sur les côtés par des bords relevés (21).

6. Elément de couverture de toit selon l'une des revendications 1 à 5, caractérisé par le fait que le tablier de support (20) se transforme sans discontinuité en la surface supérieure du corps de panneau (1).

7. Elément de couverture de toit selon l'une des revendications 1 à 6, caractérisé par le fait que le tablier de support (20) s'engage entièrement sous l'organe de raccordement de l'élément de liaison dans le cas ou les éléments de couverture sont posés.

8. Elément de couverture de toit selon l'une des revendications 1 à 7, caractérisé par le fait que des fentes d'écoulement sont pratiquées sur ses nervures (9) de talon.

Fig. 1

Fig. 2

Fig. 3